# EUROPEAN PATENT APPLICATION

(11) **EP 2 719 918 A1**
(43) Date of publication of application: **16.04.2014**
(21) Application number: 12801131.9
(22) Date of filing: 29.05.2012
(51) Int. Cl.: F16F 9/53

(54) **MAGNETIC VISCOUS DAMPER**

(30) Priority: 13.06.2011 JP 2011131257
(71) Applicant: Kayaba Industry Co., Ltd., Tokyo 105-6111 (JP)
(72) Inventor: SAITO, Keiji, Tokyo 105-6111 (JP); SHIMADA, Miho, Tokyo 105-6111 (JP)
(74) Representative: Grünecker, Kinkeldey, Stockmair & Schwanhäusser
(86) International application number: PCT/JP2012/063708
(87) International publication number: WO 2012/172961

(57) **Abstract**

A magnetorheological fluid shock absorber that uses a magnetorheological fluid having a viscosity includes: a tubular cylinder formed from a non-magnetic material and having the magnetorheological fluid sealed into an inner periphery thereof; a piston formed from a non-magnetic material and disposed in the cylinder to be free to slide at an interval, through which the magnetorheological fluid can pass, relative to the inner periphery of the cylinder; a piston rod to which the piston is connected; and a magnet portion attached to cylinder in order to apply a magnetic field to an interior of the cylinder. The magnet portion includes a permanent magnet having an inner peripheral shape that aligns with an outer periphery of the cylinder; and a ring member formed from a magnetic material and disposed on an outer peripheral side of the permanent magnet.

## Description

### TECHNICAL FIELD

This invention relates to a magnetorheological fluid shock absorber that uses a magnetorheological fluid having an apparent viscosity that is varied by an action of a magnetic field.

### BACKGROUND ART

A damping force of a shock absorber installed in a vehicle such as an automobile may be varied by applying a magnetic field to a flow passage through which a magnetorheological fluid passes in order to vary an apparent viscosity of the magnetorheological fluid.

JP2007-239982A discloses a magnetorheological fluid shock absorber in which a permanent magnet is attached to respective axial direction end portions of a cylinder in which a magnetorheoloigcal fluid is sealed. In this magnetorheological fluid shock absorber, a yoke material is provided on an outer periphery of the cylinder, and a piston and a part of a piston rod are formed from a ferromagnetic material. In this magnetorheological fluid shock absorber, when the piston is positioned in a neutral region, a magnetic force of the permanent magnet does not act on the magnetorheological fluid. When the piston strokes beyond the neutral region, on the other hand, a magnetic circuit is formed from the permanent magnet via the piston rod, the piston, and the yoke material. As a result, the magnetic force of the permanent magnet acts on the magnetorheological fluid between the piston and the cylinder, leading to an increase in a viscosity of the magnetorheological fluid and a corresponding increase in a damping coefficient.

### SUMMARY OF INVENTION

With the magnetorheological fluid shock absorber described in JP2007-239982A, however, when the piston strokes beyond the neutral region, the magnetic force of the permanent magnet acts on the magnetorheological fluid, causing the damping coefficient to vary greatly. In this magnetorheological fluid shock absorber, therefore, the viscosity of the magnetorheological fluid, or in other words the damping coefficient, varies in steps between a time at which the piston is positioned in the neutral region and a time at which the piston passes the neutral position. Further, the magnetorheological fluid shock absorber is structured such that a periphery of a magnetic field generation device is covered by the magnetorheological fluid, and therefore a magnetic field generated by the magnetic field generation device disperses such that magnetism cannot be applied to the magnetorheological fluid efficiently.

This invention has been designed in consideration of the problems described above, and an object thereof is to provide a magnetorheological fluid shock absorber in which a magnet is attached to a cylinder, and with which magnetism is applied efficiently so that a damping coefficient is varied continuously relative to a stroke amount of a piston.

According to one aspect of this invention, a magnetorheological fluid shock absorber that uses a magnetorheological fluid having a viscosity that is varied by an action of a magnetic field is provided. The magnetorheological fluid shock absorber includes: a tubular cylinder formed from a non-magnetic material and having the magnetorheological fluid sealed into an inner periphery thereof; a piston formed from a non-magnetic material and disposed in the cylinder to be free to slide at an interval, through which the magnetorheological fluid can pass, relative to the inner periphery of the cylinder; a piston rod to which the piston is connected; and a magnet portion attached to the cylinder in order to apply a magnetic field to an interior of the cylinder. The magnet portion includes a permanent magnet having an inner peripheral shape that aligns with an outer periphery of the cylinder; and a ring member formed from a magnetic material and disposed on an outer peripheral side of the permanent magnet.

The details as well as other features and advantages of this invention are set forth in the remainder of the specification and are shown in the accompanying drawings.

### BRIEF DESCRIPTION OF DRAWINGS

FIG. 1 is a sectional view of a magnetorheological fluid shock absorber according to a first embodiment of this invention.
FIG. 2A is a IIA-IIA sectional view of FIG. 1.
FIG. 2B is a view illustrating a permanent magnet of the magnetorheological fluid shock absorber according to the first embodiment of this invention.
FIG. 3 is a graph illustrating an action of the magnetorheological fluid shock absorber according to the first embodiment of this invention.
FIG. 4A is a sectional view showing a piston, a cylinder, and a magnet portion of a magnetorheological fluid shock absorber according to a second embodiment of this invention.
FIG. 4B is a view illustrating a permanent magnet of the magnetorheological fluid shock absorber according to the second embodiment of this invention.
FIG. 5A is a sectional view showing a piston, a cylinder, and a magnet portion of a modified example of the magnetorheological fluid shock absorber according to the second embodiment of this invention.
FIG. 5B is a view illustrating a permanent magnet of the modified example of the magnetorheological fluid shock absorber according to the second embodiment of this invention.

### DESCRIPTION OF EMBODIMENTS

Embodiments of this invention will be described below with reference to the figures.

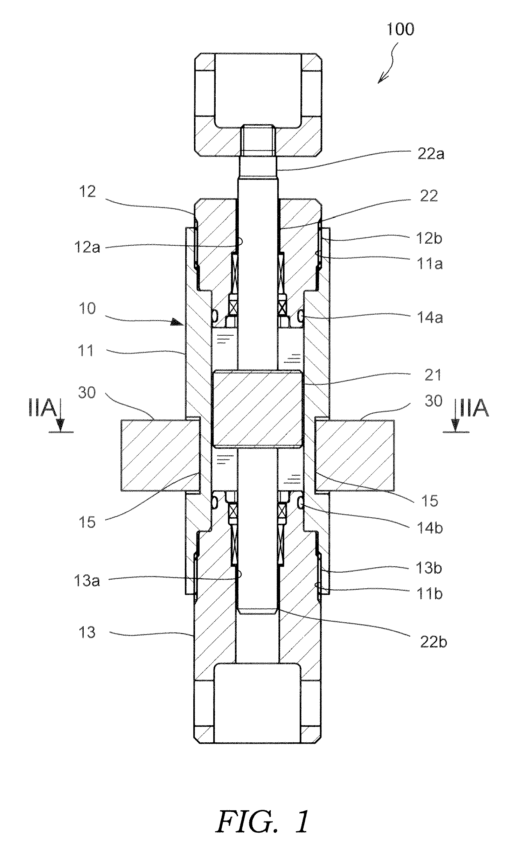

First, referring to FIG. 1, an overall configuration of a magnetorheological fluid shock absorber 100 according to a first embodiment of this invention will be described. FIG. 1 is a sectional view of the magnetorheological fluid shock absorber 100.

The magnetorheological fluid shock absorber 100 is a damper in which a damping coefficient relative to a force applied in an axial direction can be varied using a magnetorheological fluid that is varied in viscosity by an action of a magnetic field. The magnetorheological fluid shock absorber 100 is formed such that the damping coefficient thereof varies proportionally in accordance with a stroke amount of a piston 21.

The magnetorheological fluid shock absorber 100 includes a tubular cylinder 10 having a magnetorheological fluid sealed into an inner periphery thereof, the piston 21, which is disposed in the cylinder 10 to be free to slide in an axial direction of the cylinder 10, a piston rod 22 to which the piston 21 is connected, and a magnet portion 30 that is fixed to an outer periphery of the cylinder 10 in order to apply a magnetic field to an interior of the cylinder 10.

The magnetorheological fluid sealed in the cylinder 10 is a fluid formed by dispersing ferromagnetic microparticles through a fluid such as oil, and has an apparent viscosity that is varied by an action of a magnetic field. The viscosity of the magnetorheological fluid varies in accordance with an intensity of the applied magnetic field, and reaches a minimum when no magnetic field effect is present.

The cylinder 10 includes a cylindrical portion 11 formed in a cylindrical shape having opening portions at either end, and a head member 12 and a bottom member 13 respectively attached to the opening portions at either end of the cylindrical portion 11.

The cylindrical portion 11 includes a screw portion 11a formed on an inner periphery in one opening portion, and a screw portion 11b formed on an inner periphery in the other opening portion.

A screw portion 12b that is screwed to the screw portion 11a of the cylindrical portion 11 is formed on an outer periphery of the head member 12. A seal member 14a is provided between the inner periphery of the cylindrical portion 11 and the outer periphery of the head member 12 so that the magnetorheological fluid is sealed within the cylinder 10. A hole 12a for inserting the piston rod 22 is formed in the head member 12.

Similarly, a screw portion 13b that is screwed to the screw portion 11b of the cylindrical portion 11 is formed on an outer periphery of the bottom member 13. A seal member 14b is provided between the inner periphery of the cylindrical portion 11 and the outer periphery of the bottom member 13 so that the magnetorheological fluid is sealed within the cylinder 10. A hole 13a for inserting the piston rod 22 is formed in the bottom member 13.

The cylinder 10 is formed from a non-magnetic material. In so doing, the cylinder 10 can be prevented from forming a magnetic path, and therefore a magnetic field can be applied efficiently from the magnet portion 30 to the magnetorheological fluid sealed in the cylinder 10.

The cylinder 10 includes an annular recessed portion 15 formed on the outer periphery of the cylindrical portion 11 to be thinner than other parts of the cylinder 10. The magnet portion 30 is fitted around the recessed portion 15.

The piston 21 is formed in a columnar shape having a smaller outer diameter than an inner diameter of the cylindrical portion 11 of the cylinder 10. In other words, the piston 21 is formed at an annular interval, through which the magnetorheological fluid can pass, relative to the inner periphery of the cylindrical portion 11 of the cylinder 10.

When the piston 21 slides through the cylinder 10 in the axial direction, the magnetorheological fluid passes through the interval between the piston 21 and the cylinder 10. The annular interval between the piston 21 and the cylinder 10 serves as a throttle by which the magnetorheological fluid shock absorber 100 generates a damping force.

The piston 21 is formed from a non-magnetic material. In so doing, the magnetic field from the magnet portion 30 can be prevented from acting directly on the piston 21, and an increase in friction occurring when the piston 21 is pulled to one side can be prevented.

The piston rod 22 is formed coaxially with the piston 21, and penetrates a center of the piston 21. The piston rod 22 is formed integrally with the piston 21. The piston rod 22 may be formed separately from the piston 21 and joined thereto by a screw or the like.

One end portion 22a of the piston rod 22 penetrates the hole 12a in the head member 12 and extends to the outside of the cylinder 10 while being supported by the head member 12 to be free to slide. Another end portion 22b of the piston rod 22 penetrates the hole 13a in the bottom member 13 and is supported by the bottom member 13 to be free to slide.

By supporting the piston rod 22 to be free to slide using the head member 12 and the bottom member 13 in this manner, the piston rod 22 can slide through the cylinder 10 in the axial direction without deviating in a radial direction even though the annular interval is formed between the outer periphery of the piston 21 and the inner periphery of the cylinder 10.

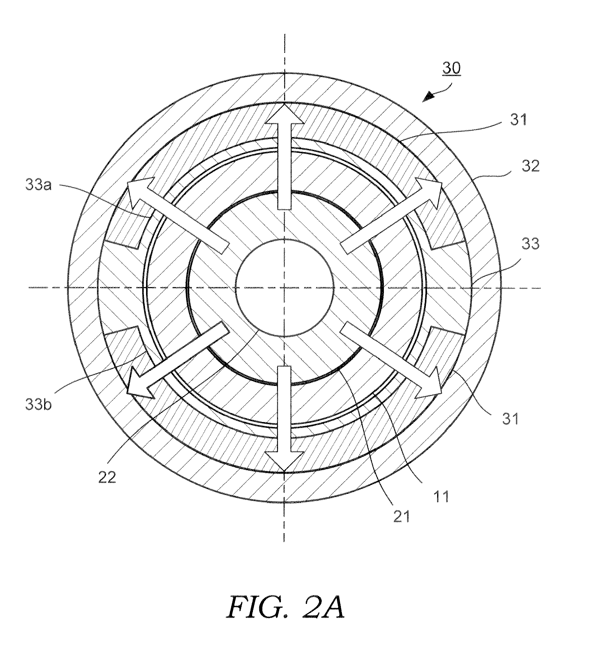

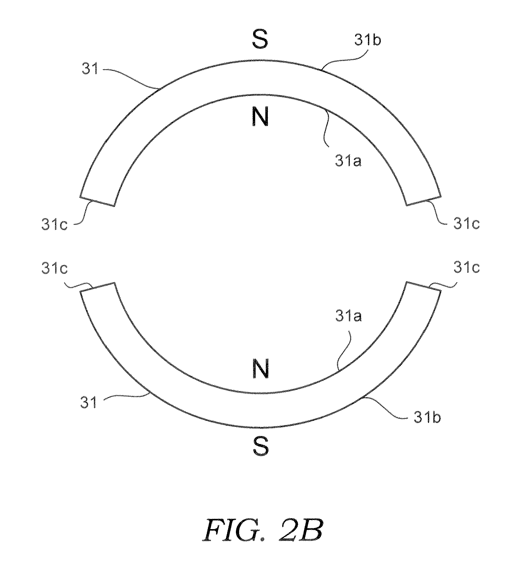

Next, referring to FIGS. 2A and 2B, the magnet portion 30 will be described. FIG. 2A is a IIA-IIA sectional view of FIG. 1. FIG. 2B is a view illustrating a permanent magnet 31 of the magnetorheological fluid shock absorber 100 according to the first embodiment of this invention.

As shown in FIG. 2A, the magnet portion 30 is formed with an annular cross-section. The magnet portion 30 is fitted around the recessed portion 15 of the cylinder 10. The recessed portion 15 is formed to be thinner than the other parts of the cylinder 10. As a result, the magnetic field from the magnet portion 30 is not prevented from acting on the magnetorheological fluid sealed in the cylinder 10.

The magnet portion 30 is constituted by a pair of permanent magnets 31, a support member 33 supporting the permanent magnets 31, and an annular magnetic ring member 32 fitted around the permanent magnets 31 and the support member 33.

Each permanent magnet 31 is a C-shaped segment magnet having an arc shape that is surrounded by an inner peripheral surface 31a constituted by a partial arc of a first circumference centering on an identical axis to an axial center of the cylinder 10, an outer peripheral surface 31b constituted by a partial arc of a second circumference that is concentric with the first circumference but has a larger diameter than the first circumference, and a pair of side portions 31c linking the inner peripheral surface 31a to the outer peripheral surface 31b. The pair of permanent magnets 31 are formed in an identical shape and disposed symmetrically about the central axis of the cylinder 10.

As shown in FIG. 2B, the permanent magnets 31 are magnetized by groups of magnetic poles in a radial direction. In the example shown in FIG. 2B, the permanent magnets 31 are respectively magnetized to an N pole on the inner peripheral surface 31a side and an S pole on the outer peripheral surface 31b side. In the magnet portion 30, the pair of permanent magnets 31 are disposed such that the respective magnetic poles thereof oppose each other about the central axis of the cylinder 10. In other words, the pair of permanent magnets 31 are magnetized in an identical direction to each other and disposed in line symmetry about a line segment passing through the central axis of the cylinder 10.

An inner peripheral side of the support member 33 is formed in a cylindrical shape that aligns with the periphery of the recessed portion 15 formed in an annular shape. A groove portion 33a and a groove portion 33b are formed on an outer peripheral side of the support member 33 to fix the permanent magnets 31 to an outer circumferential form thereof. When the permanent magnets 31 are fixed respectively to the groove portion 33a and the groove portion 33b, the outer periphery of the support member 33 forms an identical circle to the aforesaid second circumference.

The support member 33 is formed from a non-magnetic material, similarly to the cylinder 10. In so doing, the support member 33 is prevented from forming a magnetic path, and therefore the magnetic field from the magnet portion 30 is applied to the magnetorheological fluid efficiently.

The annular magnetic ring member 32 is formed from a magnetic material and fitted to the outer periphery of the support member 33. The magnetic ring member 32 is fitted tightly to the outer periphery of the support member 33 in a condition where the permanent magnets 31 are fixed respectively to the groove portion 33a and the groove portion 33b.

The magnetic ring member 32 forms a magnetic path for a magnetic field generated by the permanent magnets 31. The magnetic ring member 32 is formed from a soft magnetic material having a high permeability and a low coercive force relative to a residual magnetic field.

The pair of permanent magnets 31 are fixed by the support member 33 so as to be removed from each other. In other words, a central angle of the inner peripheral surface 31a and the outer peripheral surface 31b of the permanent magnet 31 is set at less than 180°. Further, the outer peripheral surface 31b of the permanent magnet 31 closely contacts an inner peripheral surface of the magnetic ring member 32.

With this configuration, the magnet portion 30 generates a magnetic field in a direction indicated by an arrow in FIG. 2A. More specifically, by disposing the pair of permanent magnets 31 such that the magnetic poles thereof oppose each other, magnetic force is generated in a radial direction from the central axis of the cylinder 10. This magnetic force is applied evenly to the magnetorheological fluid existing in the interval between the piston 21 and the cylinder 10, enabling an increase in the viscosity of the magnetorheological fluid.

Further, the magnetic ring member 32 made of a magnetic material is disposed on the outer side of the permanent magnets 31, and therefore a magnetic field heading toward the outer peripheral surface 31b side passes through the interior of the magnetic ring member 32 without dispersing. Hence, the magnetic field can be applied to the magnetorheological fluid more efficiently.

The magnet portion 30 is disposed to correspond to a position of the piston 21 when the piston rod 22 is furthest advanced into the cylinder 10. Hence, the viscosity of the magnetorheological fluid in the cylinder 10 differs according to the axial direction position. More specifically, the ferromagnetic microparticles gather in the vicinity of the magnet portion 30 due to an increase in the effect of the magnetic field, and therefore the viscosity of the magnetorheological fluid in the cylinder 10 increases gradually toward the magnet portion 30. Away from the magnet portion 30, on the other hand, the effect of the magnetic field decreases, leading to a reduction in the viscosity of the magnetorheological fluid in the cylinder 10.

Hence, when the piston rod 22 strokes in an advancement direction into the cylinder 10, the effect of the magnetic field generated by the magnet portion 30 on the magnetorheological fluid passing through the interval between the piston 21 and the cylinder 10 gradually increases. Therefore, the apparent viscosity of the magnetorheological fluid increases in accordance with the stroke of the piston rod 22 in the advancement direction into the cylinder 10. Accordingly, the damping coefficient of the magnetorheological fluid shock absorber 100 increases as the piston rod 22 advances into the cylinder 10, and as a result, the damping coefficient can be varied continuously in accordance with the stroke amount of the piston 21.

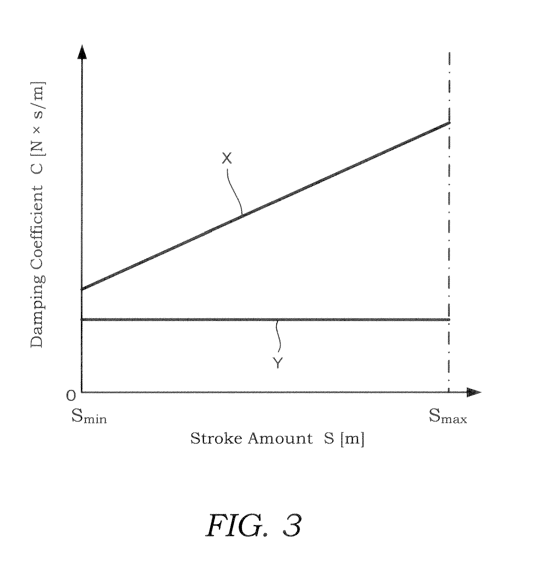

Next, referring to FIG. 3, actions of the magnetorheological fluid shock absorber 100 will be described.

In FIG. 3, the abscissa shows a stroke amount S [m], which is an amount by which the piston rod 22 advances into the cylinder 10, while the ordinate shows a damping coefficient C [N x s/m] of the magnetorheological fluid shock absorber 100. In FIG. 3, a straight line X represents the damping coefficient C of the magnetorheological fluid shock absorber 100, while a straight line Y represents the damping coefficient C in a case where the magnetorheological fluid shock absorber 100 is not provided with the magnet portion 30 such that a magnetic field is not applied to the magnetorheological fluid in the cylinder 10.

In the case where the magnet portion 30 is not provided, the annular interval serving as the throttle between the piston 21 and the cylinder 10 remains constant at all times, even when the piston rod 22 advances into the cylinder 10. Further, since the magnet portion 30 is not provided, the magnetorheological fluid in the cylinder 10 is not affected by a magnetic field, and therefore the viscosity of the magnetorheological fluid in the cylinder 10 remains constant regardless of the stroke amount of the piston rod 22. Hence, as shown by the straight line Y, the damping coefficient C in this case takes a constant value at all times relative to variation in the stroke amount S.

In the magnetorheological fluid shock absorber 100, on the other hand, as shown by the straight line X, the damping coefficient C is at a minimum when the stroke amount is Sₘᵢₙ, i.e. when the piston rod 22 is furthest withdrawn from the cylinder 10. Even when the stroke amount is Sₘᵢₙ, however, the magnetic field generated by the magnet portion 30 affects the magnetorheological fluid in the cylinder 10 such that the ferromagnetic microparticles are aligned, and therefore the damping coefficient C is larger than that of the case in which the magnet portion 30 is not provided.

As the piston rod 22 gradually advances into the cylinder 10 from the stroke amount Sₘᵢₙ, the damping coefficient C increases proportionally, and when the stroke amount reaches Sₘₐₓ, the damping coefficient C reaches a maximum. The reason for this is that the viscosity of the magnetorheological fluid in the annular interval between the piston 21 and the cylinder 10 gradually increases. Moreover, as the piston 21 advances to the inner peripheral side of the magnet portion 30 where the effect of the magnetic field is large, a length of the annular interval between the piston 21 and the cylinder 10 that is directly affected by the magnetic field gradually increases.

By disposing the magnet portion 30 in a position corresponding to the position of the piston 21 when the piston rod 22 is furthest advanced into the cylinder 10 in this manner, the damping coefficient C of the magnetorheological fluid shock absorber 100 can be increased proportionally relative to the stroke amount of the piston rod 22 in the advancement direction into the cylinder 10.

With the first embodiment described above, following effects are obtained.

The cylinder 10 and the piston 21 are formed from a non-magnetic material, and the magnet portion 30 that applies a magnetic field to the magnetorheological fluid in the cylinder 10 is attached to the cylinder 10. Hence, the cylinder 10 and the piston 21 do not form a magnetic path, and therefore the effect of the magnetic field on the magnetorheological fluid passing through the interval between the cylinder 10 and the piston 21 increases gradually as the piston 21 strokes toward the magnet portion 30. As a result, the damping coefficient can be varied continuously relative to the stroke amount of the piston 21.

Further, the magnet portion 30 includes the pair of permanent magnets 31 constituted by C-shaped segment magnets respectively having an inner peripheral shape that aligns with the outer peripheral shape of the cylindrical cylinder 10 in which the magnetorheological fluid is sealed. Hence, the magnetic field acts on the magnetorheological fluid existing in the interval between the piston 21 and the cylinder 10, leading to an increase in the viscosity of the magnetorheological fluid.

Furthermore, the magnetic ring member 32 formed from a magnetic material is disposed on the outer side of the permanent magnets 31, and therefore the magnetic field heading toward the outer peripheral surface 31b side passes through the magnetic ring member 32 without dispersing. As a result, the magnetic field can be applied to the magnetorheological fluid efficiently.

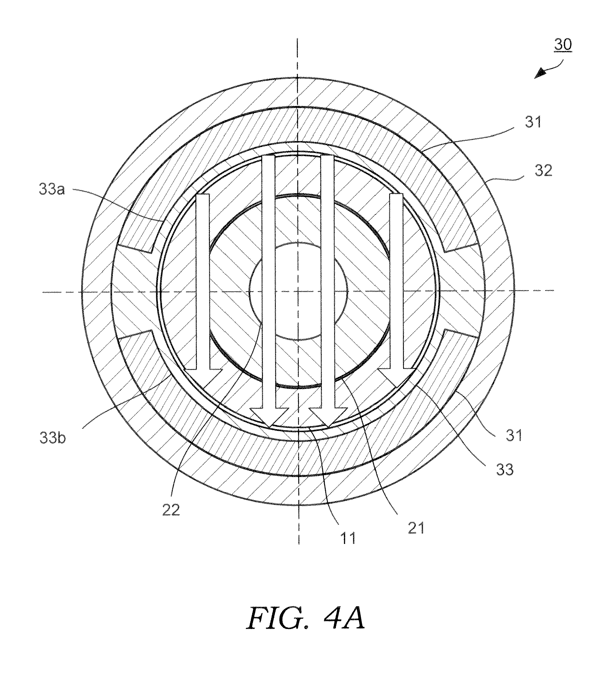

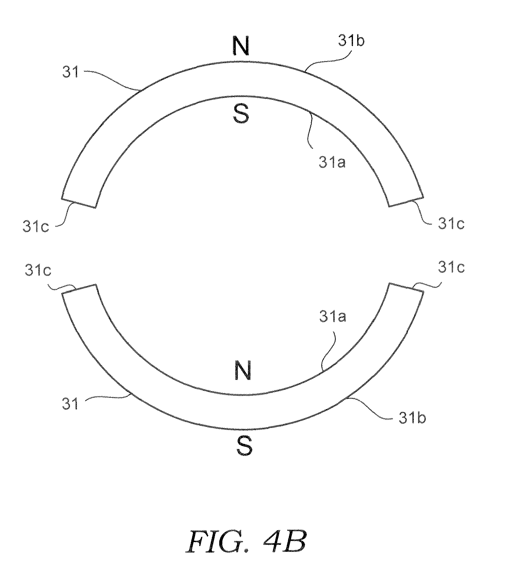

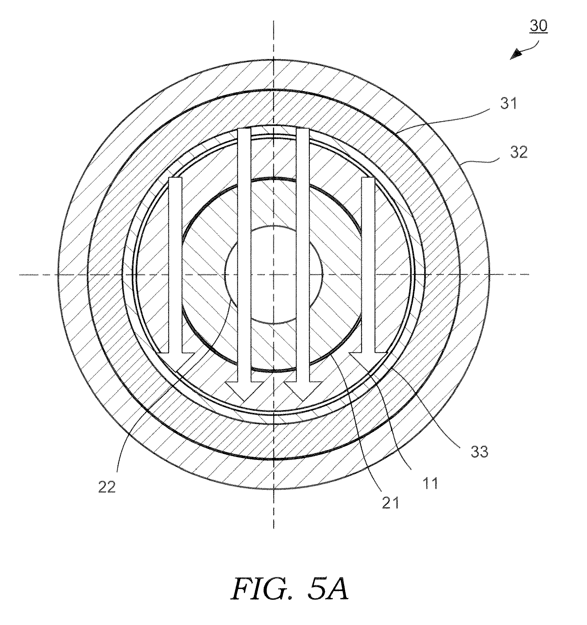

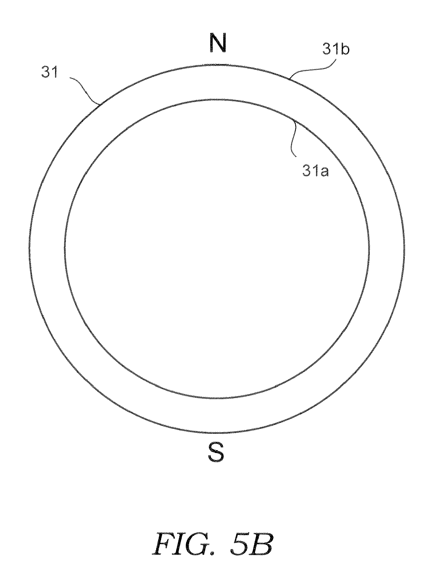

Next, referring to FIGS. 4A to 5B, a second embodiment of this invention will be described. It should be noted that in the second embodiment, identical configurations to the first embodiment have been allocated identical reference symbols, and duplicate description thereof has been omitted where appropriate. FIG. 4A is a sectional view of the cylinder 10 and the magnet portion 30 of a magnetorheological fluid shock absorber according to the second embodiment of this invention, and FIG. 4B is a view illustrating the permanent magnets 31 of the magnetorheological fluid shock absorber according to the second embodiment of this invention. Further, FIG. 5A is a sectional view of the cylinder 10 and the magnet portion 30 of a modified example of magnetorheological fluid shock absorber according to the second embodiment of this invention, and FIG. 5B is a view illustrating the permanent magnets 31 of the modified example of the magnetorheological fluid shock absorber 100 according to the second embodiment of this invention.

The magnetorheological fluid shock absorber according to the second embodiment has an identical overall basic configuration to the magnetorheological fluid shock absorber 100 according to the first embodiment, shown in FIG. 1. The magnetorheological fluid shock absorber according to the second embodiment differs from the magnetorheological fluid shock absorber 100 according to the first embodiment only in the configuration of the magnet portion 30.

The magnet portion 30, similarly to the first embodiment shown in FIG. 2, is constituted by the pair of permanent magnets 31, the support member 33 supporting the permanent magnets 31, and the annular magnetic ring member 32 fitted around the permanent magnets 31 and the support member 33.

Each permanent magnet 31 is a C-shaped segment magnet. The pair of permanent magnets 31 are formed in an identical shape and disposed symmetrically about the central axis of the cylinder 10.

In the second embodiment, the permanent magnets 31 are magnetized by groups of magnetic poles in the radial direction, as shown in FIG. 4B. In the example shown in FIG. 4B, one of the permanent magnets 31 is magnetized to an N pole on the inner peripheral surface 31a side and an S pole on the outer peripheral surface 31b side. The other permanent magnet 31 is magnetized to an S pole on the inner peripheral surface 31a side and an N pole on the outer peripheral surface 31 b side. The pair of permanent magnets 31 are disposed in the magnet portion 30 such that opposite magnetic poles oppose each other about the central axis of the cylinder 10. In other words, the magnetic poles of the pair of permanent magnets 31 differ from each other.

With this configuration, the magnet portion 30 generates a magnetic field in the direction of an arrow shown in FIG. 4A. In other words, by disposing the pair of permanent magnets 31 so that opposite magnetic poles oppose each other, magnetic force traveling from one of the permanent magnets 31 toward the other permanent magnet 31 is generated. This magnetic force is applied to the magnetorheological fluid existing in the interval between the piston 21 and the cylinder 10, leading to an increase in the viscosity of the magnetorheological fluid.

In the cylinder 10, a magnetic field is generated around a peripheral surface of the cylinder 10 in a direction following the peripheral surface of the cylinder 10 particularly in the vicinity of a boundary between the pair of permanent magnets 31. Therefore, the magnetic field can be applied to the magnetorheological fluid effectively.

Further, the magnetic ring member 32 made of a magnetic material is disposed on the outer side of the permanent magnets 31, and therefore a magnetic field traveling from one of the permanent magnets 31 toward the other permanent magnet 31 passes through the magnetic ring member 32 without dispersing. Hence, the magnetic field can be applied to the magnetorheological fluid efficiently.

In the magnet portion 30, as shown in FIG. 4B, the pair of permanent magnets 31 are disposed such that opposite magnetic poles oppose each other about the central axis of the cylinder 10. In other words, different magnetic poles oppose each other on the inner peripheral side of the permanent magnets 31.

As shown in FIG. 5B, a similar magnetic field may be formed by forming the permanent magnet 31 in a ring shape and magnetizing the permanent magnet 31 such that different magnetic poles oppose each other on the inner peripheral side thereof. More specifically, in the permanent magnet 31 formed in a ring shape, one half circumference part of the permanent magnet 3 1 is magnetized to an N pole and the other half circumference part is magnetized to an S pole. In this case, the support member 33 is formed without the groove portions, and has an outer peripheral shape that aligns with the inner periphery of the ring-shaped permanent magnet 31.

With this configuration, the magnet portion 30 generates a magnetic field in the direction of an arrow shown in FIG. 5A. In other words, a magnetic field traveling from the N pole toward the S pole is generated in the ring-shaped permanent magnet 31. The magnetic field acts on the magnetorheological fluid existing in the interval between the piston 21 and the cylinder 10, leading to an increase in the viscosity of the magnetorheological fluid.

Likewise in this case, in the cylinder 10, a magnetic field that is substantially parallel to the peripheral surface of the cylinder 10 is generated along the peripheral surface of the cylinder 10 particularly in the vicinity of a boundary between the N pole and the S pole of the ring-shaped permanent magnet 31. Therefore, the magnetic field can be applied to the magnetorheological fluid effectively.

Hence, in the second embodiment of this invention, similarly to the first embodiment described above, the damping coefficient can be varied continuously relative to the stroke amount of the piston 21.

Further, in the second embodiment of this invention, the pair of permanent magnets 31 are constituted by C-shaped segment magnets having an inner peripheral shape that aligns with the outer peripheral shape of the cylindrical cylinder 10 in which the magnetorheological fluid is sealed, and the magnetic poles thereof are disposed such that opposite magnetic poles oppose each other. As a result, a magnetic field is generated in a direction following the peripheral surface of the cylinder 10, and therefore the magnetic field can be applied to the magnetorheological fluid effectively.

Moreover, the magnetic ring member 32 made of a magnetic material is disposed on the outer side of the permanent magnets 31, and therefore the magnetic field traveling from one of the permanent magnets 31 toward the other permanent magnet 31 passes through the interior of the magnetic ring member 32 without dispersing. Hence, the magnetic field can be applied to the magnetorheological fluid more efficiently.

Although the invention has been described above with reference to certain embodiments, the invention is not limited to the embodiments described above. Modifications and variations of the embodiments described above will occur to those skilled in the art, within the scope of the claims.

The contents of Tokugan 2011-131257, with a filing date of June 13, 2011 in Japan, are hereby incorporated by reference.

The embodiments of this invention in which an exclusive property or privilege is claimed are defined as follows:

## Claims

1. A magnetorheological fluid shock absorber that uses a magnetorheological fluid having a viscosity that is varied by an action of a magnetic field, comprising:
a tubular cylinder formed from a non-magnetic material and having the magnetorheological fluid sealed into an inner periphery thereof;
a piston formed from a non-magnetic material and disposed in the cylinder to be free to slide at an interval, through which the magnetorheological fluid can pass, relative to the inner periphery of the cylinder;
a piston rod to which the piston is connected; and
a magnet portion attached to the cylinder in order to apply a magnetic field to an interior of the cylinder,
wherein the magnet portion comprises:
a permanent magnet having an inner peripheral shape that aligns with an outer periphery of the cylinder; and
a ring member formed from a magnetic material and disposed on an outer peripheral side of the permanent magnet.

2. The magnetorheological fluid shock absorber as defined in Claim 1, wherein the magnet portion is disposed to correspond to a position of the piston when the piston rod is furthest advanced into the cylinder.

3. The magnetorheological fluid shock absorber as defined in Claim 1, wherein the permanent magnet is provided in a pair respectively formed in an arc shape having an inner peripheral shape that aligns with the outer periphery of the cylinder and disposed so as to face each other about a central axis of the cylinder.

4. The magnetorheological fluid shock absorber as defined in Claim 3, wherein the pair of permanent magnets are magnetized in a radial direction and disposed such that respective magnetic poles thereof are symmetrical about the central axis of the cylinder.

5. The magnetorheological fluid shock absorber as defined in Claim 3, wherein the pair of permanent magnets are magnetized in a radial direction and disposed such that opposite magnetic poles oppose each other about the central axis of the cylinder.

6. The magnetorheological fluid shock absorber as defined in Claim 1, wherein the permanent magnet is formed in a ring shape having an inner peripheral shape that aligns with the outer periphery of the cylinder, and disposed such that opposite magnetic poles oppose each other about the central axis of the cylinder.
